# EUROPEAN PATENT APPLICATION

(11) **EP 1 876 731 A1**
(43) Date of publication of application: **09.01.2008**
(21) Application number: 06715060.7
(22) Date of filing: 02.03.2006
(51) Int. Cl.: H04B 7/26, H04L 12/28

(54) **VEHICLE-MOUNTED COMMUNICATION DEVICE AND METHOD OF COMMUNICATION**

(30) Priority: 08.04.2005 JP 2005111593
(71) Applicant: Nissan Motor Company Limited, Kanagawa-ku Yokohama-shi, Kanagawa 221-0023 (JP)
(72) Inventor: TAKAGI, Toru, c/o Nissan Motor Co.Ltd. Int.Prop.Dpt., Kanagawa 243-0192 (JP); FUJITA, Susumu, c/o Nissan Motor Co.Ltd. Int.Prop.Dpt., Kanagawa 243-0192 (JP); YAMANE, Masao, c/o Nissan Motor Co.Ltd. Int.Prop.Dpt., Kanagawa 243-0192 (JP)
(74) Representative: Grünecker, Kinkeldey, Stockmair & Schwanhäusser Anwaltssozietät
(86) International application number: PCT/JP2006/303951
(87) International publication number: WO 2006/112161

(57) **Abstract**

An on-vehicle communication apparatus provided with: endpoint radio communication devices each provided for each one or more on-vehicle units; gateway radio communication devices which are respectively arranged in function networks provided with the above-mentioned one or more on-vehicle units, and performs radio communications with the endpoint radio communication devices that are included in the function network; and power sources each provided for any one of the above-mentioned one or more on-vehicle units and the above-mentioned one or more function networks.

## Description

### TECHNICAL FIELD

The present invention relates to an on-vehicle communication apparatus and a method with which a vehicle such as an automobile is mounted.

### BACKGROUND ART

As the number of signal wires has been increased along with an increase of on-vehicle electrical parts mounted on an automobile, the signal wires have been multiplexed.

In Japanese Patent Publication No. 2898684, a multiplex transmission system mounted on an automobile has been disclosed. In this multiplex transmission system, a plurality of multiplex nodes each including detecting means and driving means are connected to one another through at least two shared signal transmission lines. Additionally, a gateway node, which is connected to each of the signal transmission lines and includes transmission controlling means for controlling signal transmission between the signal transmission lines, is arranged at a position of a joint box, the position corresponding to a junction of wiring harness pathways. Then, when a signal for performing drive control of predetermined one of the driving means is inputted into the gateway node from any one of the multiplex nodes, the signal is transmitted, by the transmission controlling means, to any other one of the multiplex nodes in accordance with the signal.

### DISCLOSURE OF INVENTION

In the abovementioned conventional technology, networks are divided into high-speed networks and low-speed networks in accordance with transmission rates (required responsiveness) of signals, and it is therefore required that the transmission rates of the signals be converted. For this reason, there is a problem that a failure for a function to make a proper operational response to a multiplex node may possibly occur. Additionally, in a case where the number of on-vehicle electrical parts increases, if the networks are configured by function, laying out of a wiring harness becomes difficult because the wiring harness increases in amount, and therefore increases in weight. Furthermore, because connectors increase in number and come to require a large installation space, there is a problem that securing of a space therefor in a vehicle becomes difficult.

The present invention has been made in consideration of the abovementioned problems, and an object thereof is to provide an on-vehicle communication apparatus and a method which are capable of solving these problems and properly conducting operations of each function.

One aspect of the present invention includes: endpoint radio communication devices each provided for each one or more on-vehicle units; gateway radio communication devices each of which is arranged in each of function networks provided with the on-vehicle units, and performs radio communications with the endpoint radio communication devices that are included in each of the function networks; and power sources each provided for any one of the above-mentioned on-vehicle units and the above-mentioned function networks.

### BRIEF DESCRIPTION OF THE DRAWINGS

[Fig. 1] Fig. 1 is a block diagram of an on-vehicle communication apparatus of a first embodiment of the present invention.
[Fig. 2] Fig. 2 is a view showing various function networks for an automobile in the first embodiment of the present invention.
[Fig. 3] Fig. 3 is a diagram showing a configuration of an on-vehicle unit in the first embodiment of the present invention.
[Fig. 4] Fig. 4 is a diagram showing a configuration of a vehicle monitoring apparatus in the first embodiment of the present invention.
[Fig. 5] Fig. 5 is a flowchart showing operations of the on-vehicle communication apparatus of the first embodiment of the present invention.
[Fig. 6] Fig. 6 is a block diagram of a function network of an on-vehicle communication apparatus of a second embodiment of the present invention.
[Fig. 7] Fig. 7 is a flowchart showing operations of the on-vehicle communication apparatus of the second embodiment of the present invention.
[Fig. 8] Fig. 8 is a flowchart showing operations of the on-vehicle communication apparatus of the second embodiment of the present invention.
[Fig. 9] Fig. 9 is a block diagram of a function network of an on-vehicle communication apparatus of a third embodiment of the present invention.
[Fig. 10] Fig. 10 is a flowchart showing operations of the on-vehicle communication apparatus of the third embodiment of the present invention.
[Fig. 11] Fig. 11 is a flowchart showing operations of the on-vehicle communication apparatus of the third embodiment of the present invention.

### BEST MODE FOR CARRYING OUT THE INVENTION

Embodiments of the present invention will be described below in detail by using the drawings. Note that, in the following description, repetitive explanations on elements having the same functions will be omitted by assigning them the same reference numerals.

### «First Embodiment»

Firstly, a first embodiment of the present invention will be described.

### (Configuration)

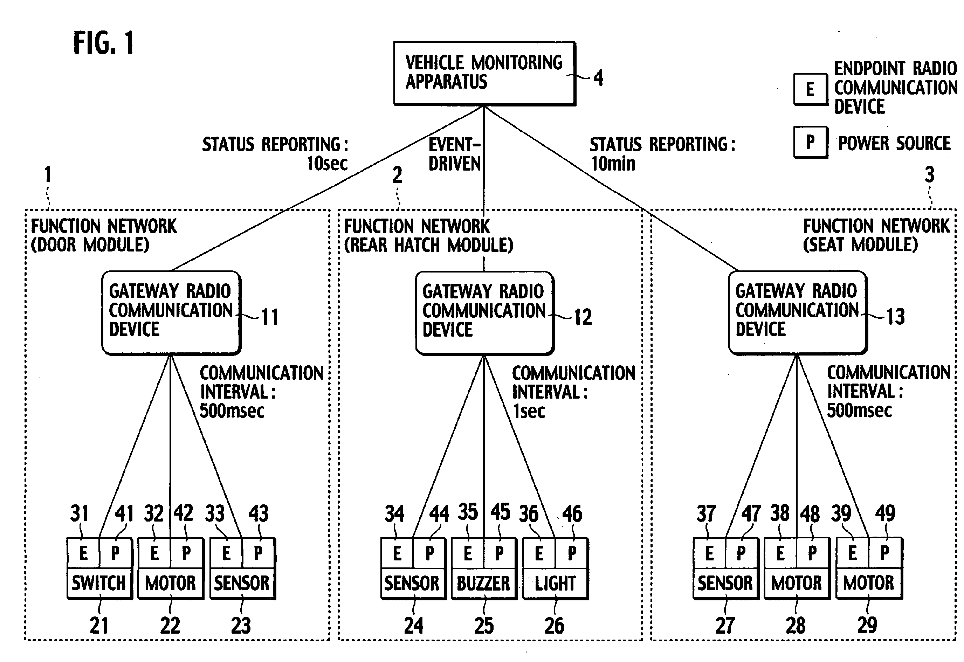

As shown in Fig. 1, an on-vehicle communication apparatus (a radio communication network for an automobile) of this embodiment includes a plurality of function networks (that is, networks for modules) 1, 2 and 3 divided from one another by function of the automobile. The respective function networks 1 to 3 are, for example, networks for a door module, for a rear hatch module, and for a seat module, respectively. Gateway radio communication devices 11, 12 and 13 are respectively provided to the respective function networks 1 to 3. These gateway radio communication devices 11, 12 and 13 are connected to a vehicle monitoring apparatus (a vehicle monitoring computer) 4.

The function network 1 for the door module includes, for example, an on-vehicle unit 21 which is a switch, an on-vehicle unit 22 which is a motor, and an on-vehicle unit 23 which is a sensor. Endpoint radio communication devices 31, 32 and 33 (to which E is assigned in the drawing), and power sources 41, 42 and 43 (to which P is given in the drawing) are provided to the respective on-vehicle units 21 to 23.

Likewise, the function network 2 for the rear hatch module includes, for example, an on-vehicle unit 24 which is a sensor, an on-vehicle unit 25 which is a buzzer, and an on-vehicle unit 26 which is a light. Endpoint radio communication devices 34, 35 and 36, and power sources 44, 45 and 46 are provided to the respective on-vehicle units 24 to 26.

Likewise, the function network 3 for the seat module includes, for example, an on-vehicle unit 27 which is a sensor, an on-vehicle unit 28 which is a motor, and an on-vehicle unit 29 which is a motor. Endpoint radio communication devices 37, 38 and 39, and power sources 47, 48 and 49 are provided to the respective on-vehicle units 27 to 29.

In other words, the gateway radio communication devices 11, 12 and 13 are provided to the respective function networks 1, 2 and 3. Note that the abovementioned function networks 1 to 3 are absolutely exemplifications, and it goes without saying that there exist a larger number of function networks.

In the function network 1, the gateway radio communication device 11 is wirelessly connected by radio waves to the respective endpoint radio communication devices 31 to 33. Likewise, in the function networks 2 and 3, the gateway radio communication devices 12 and 13 are wirelessly connected by radio waves to the endpoint radio communication devices 34 to 36, and to the endpoint radio communication devices 37 to 39, respectively. The endpoint radio communication devices 31 to 39 respectively connected to the gateway radio communication devices 11 to 13 are communication devices of a communication method requiring a very small power consumption. This communication method is, for example, a communication method utilized in a personal area network defined by IEEE 802.16. If configuration of the function networks is attempted by using a wiring harness, not only laying out of the wiring harness becomes difficult because the wiring harness increases in amount and therefore increases in weight, but also securing of a space in a vehicle becomes difficult because connectors increases in number and comes to require a large installation space. In this embodiment, the networks on a function-to-function basis can be achieved by wirelessly configuring the signal wires, and eliminating power wires.

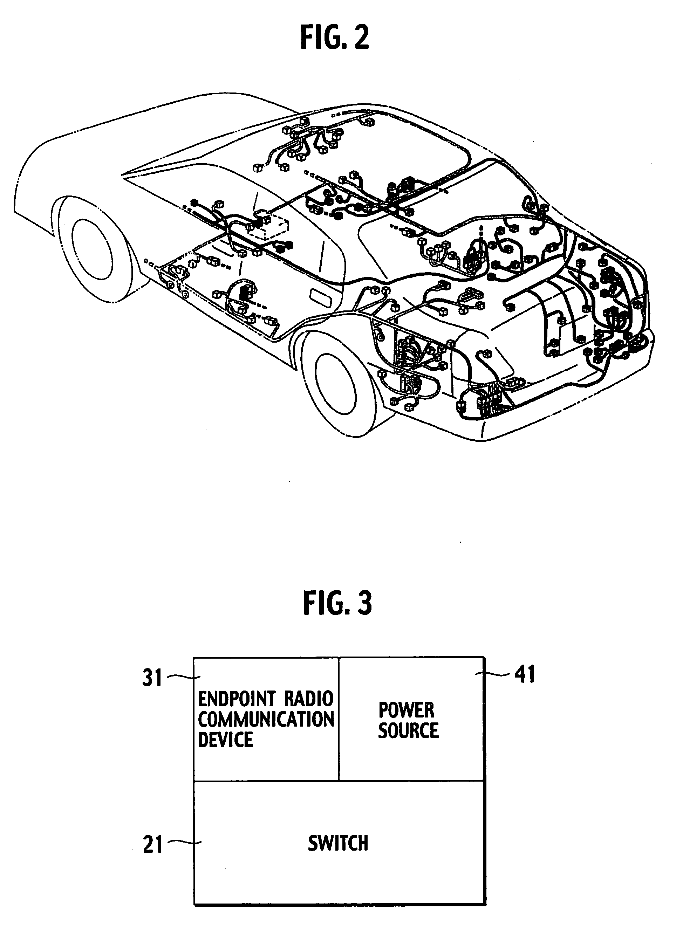

Fig. 2 is a view showing an arrangement of various function networks for an automobile. As the function networks for an automobile, there are those related to a power train system, related to a passive safety (air bag) system, related to an installation panel, a steering switch and an air conditioner, related to doors (of the driver's seat, of the passenger' s seat and of rear seats), a rear hatch and a roof, related to seats, related to lamps and the like. The installation panel includes a navigation apparatus, and, when speedup thereof is required, the speedup is made ready by making a gateway radio communication device thereof multistage.

Fig. 3 is a diagram showing a configuration of the on-vehicle unit 21.

As exemplified in Fig. 3, the endpoint radio communication device 31 are connected to the on-vehicle unit 21 (the switch) and to the power source 41.

Likewise, the endpoint radio communication devices 32 to 39 (Fig. 1) are respectively connected to the on-vehicle units 22 to 29, and to the power sources 42 to 49.

The gateway radio communication device 11 (Fig. 1) polls each of the endpoint radio communication devices 31 to 33 at predetermined communication intervals, for example, every 500 milliseconds. Likewise, the gateway radio communication device 13 (Fig. 1) polls each of the endpoint radio communication devices 37 to 39 at predetermined communication intervals, for example, every 500 milliseconds. The gateway radio communication device 12 polls each of the endpoint radio communication devices 34 to 36 at predetermined communication intervals, for example, every one second. Each of the endpoint radio communication devices 31 to 39 is configured to be connected to corresponding one of the on-vehicle units 21 to 29 and corresponding one of the power sources 41 to 49 in a basic unit of each of the on-vehicle units. In other words, the on-vehicle units 21 to 29 are respectively provided with the endpoint radio communication devices 31 to 39, and with the power sources 41 to 49.

Note that, among the on-vehicle units 21 to 29, there is one that is not required to operate with a vehicle power supply voltage, for example, 12 V. A CPU of an electric circuit, or the like, is configured to operate with such a voltage that makes a power consumed thereby smaller, for example, a voltage of 3 V or less. On the other hand, also among the on-vehicle units 21 to 29, there is also one that requires a large power supply capacity in order to operate, and is configured to operate with a voltage higher than the vehicle power supply voltage. The power sources 41 to 49 are power sources of a cell scheme by which power supply voltages can be individually supplied to the respective on-vehicle units 21 to 29 with appropriate voltages therefor, and the power sources 41 to 49 thereby eliminate the need of any DC-DC converter which converts a voltage into the vehicle power supply voltage.

Additionally, depending on communication frequencies of the on-vehicle units 21 to 29 in the respective function networks 1 to 3, and on capacities of the power sources 41 to 49, it is also possible for any one of the on-vehicle units 21 to 29 to share, with another one of the on-vehicle units in the same function network, the endpoint radio communication devices 31 to 39 or the power sources 41 to 49. Additionally, it is also possible for the power sources 41 to 49 to be shared among the function networks 1 to 3.

In order to bind the function networks 1 to 3 together, the vehicle monitoring apparatus 4 is wirelessly connected to the respective gateway radio communication devices 11 to 13.

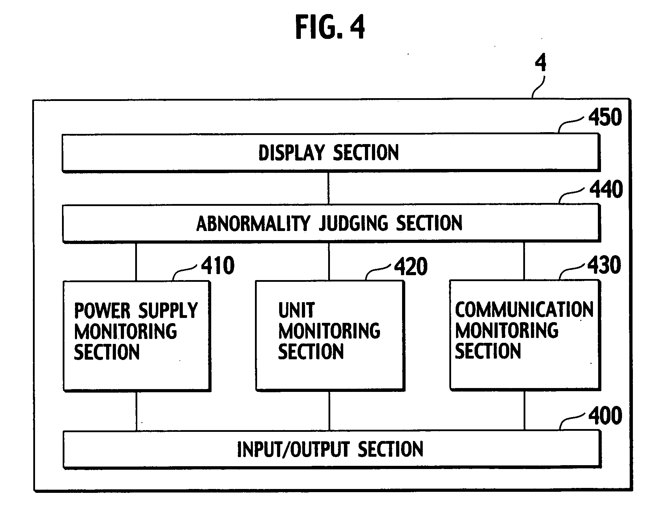

Fig. 4 is a diagram showing a configuration of the vehicle monitoring apparatus 4.

As shown in Fig. 4, the vehicle monitoring apparatus 4 is composed of an input/output section 400, a power source monitoring section 410, a unit monitoring section 420, a communication monitoring section 430, an abnormality judging section 440 and a display section 450. The input/output section 400 is wirelessly connected to the gateway radio communication devices 11 to 13 (Fig. 1), and receives status reports from the function networks 1 to 3. The power source monitoring section 410 monitors, based on the status reports from the function networks 1 to 3, whether or not a remaining power supply capacity is sufficient. The unit monitoring section 420 monitors, based on the status reports from the function networks 1 to 3, whether each of the on-vehicle units is normal or abnormal. The communication monitoring section 430 monitors, based on the status reports from the function networks 1 to 3, whether or not communication abnormalities in each of the function networks 1 to 3 have constantly occurred. When having received, from at least any one of the power source monitoring section 410, the unit monitoring section 420 and the communication monitoring section 430, a report indicating that there is an abnormality, the abnormality judging section 440 judges that the one is abnormal, and the abnormality is presented to a user (a driver) through the display section 450.

### (Functions)

Next, functions of the on-vehicle communication apparatus of this embodiment will be described.

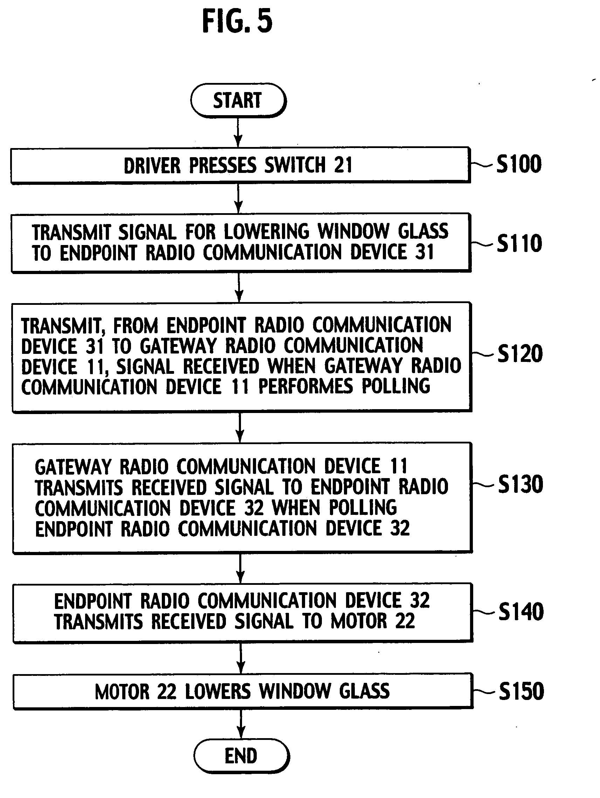

Fig. 5 is a flowchart showing operations of the on-vehicle communication apparatus of this embodiment. As an example, operations will be described for a case where the function network 1 (Fig. 1) is, for example, a door module of the driver' s seat side at the time of opening a power window.

First of all, the user presses the on-vehicle unit 21 (the switch) when the user tries to open a window of the driver's seat side (S100).

The on-vehicle unit 21 (the switch) transmits, to the endpoint radio communication device 31, a signal for lowering a window glass in accordance with a pressed amount of the switch (S110).

When the gateway radio communication device 11 polls the endpoint radio communication device 31 (when it has accessed the endpoint radio communication device 31 so as to check a transmission request), the endpoint radio communication device 31 transmits, to the gateway radio communication device 11, the signal for lowering the window glass (S120).

When polling the endpoint radio communication device 32 to which the on-vehicle unit 22 (the motor) is connected, the gateway radio communication device 11 transmits, to the endpoint radio communication device 32, the signal for lowering the window glass (S130).

The endpoint radio communication device 32 transmits the received signal to the on-vehicle unit 22 (the motor) (S140).

The on-vehicle unit 22 (the motor) lowers the window glass while receiving power supply from the power source 42 (S150) .

The gateway radio communication devices 11 to 13 report, to the vehicle monitoring apparatus 4, statuses of the respective function networks 1 to 3, the statuses being, to be more specific, whether or not three checkpoints, which are the power sources 41 to 49, the on-vehicle units 21 to 29 and the endpoint radio communication devices 31 to 39 in the respective function networks, are normally operating respectively. In other words, the respective gateway radio communication devices 11 to 13 do not exchange control signals of the on-vehicle units 21 to 29 with the vehicle monitoring apparatus 4, and only execute reporting on whether or not the respective function networks are normally operating. Between each of the gateway radio communication devices 11 and 13 and the vehicle monitoring apparatus 4, status reporting is executed at intervals very much longer than communication intervals of each of the function networks 1 to 3, for example, every 10 seconds in the gateway radio communication device 11, or every 10 minutes in the gateway radio communication device 13. In the gateway radio communication device 12, status reporting is executed (event-driven) in response to operations of the on-vehicle units 24 to 26, or changes of statuses thereof. When having received from the gateway radio communication devices 11 to 13 a report indicating that at least any one of three checkpoints, which are the power sources 41 to 49, the on-vehicle units 21 to 29 and the endpoint radio communication devices 31 to 39, is abnormal, the vehicle monitoring apparatus 4 causes the display section 450 to show that the gateway radio communication devices 11 to 13 are not normally operating.

As has been described above, the on-vehicle communication apparatus of this embodiment is configured to include: the endpoint radio communication devices 31 to 39 each provided for at least one of the on-vehicle units 21 to 29; the gateway radio communication devices 11 to 13 which are arranged in the respective function networks 1 to 3 each provided with at least one of the on-vehicle units 21 to 29, and perform radio communication with the endpoint radio communication devices 31 to 39 in the respective function networks 1 to 3; and the power sources 41 to 49 each provided for at least any one of the on-vehicle units 21 to 29, and the function networks 1 to 3. Additionally, an on-vehicle communication method of this embodiment is configured to: provide each of the endpoint radio communication devices 31 to 39 for at least one of the on-vehicle units 21 to 29; arrange, in the respective function networks 1 to 3 provided with at least one of the on-vehicle units 21 to 29, the gateway radio communication devices 11 to 13 which perform radio communication with the endpoint radio communication devices 31 to 39 in the respective function networks 1 to 3; and provide each of the power sources 41 to 49 for at least one of the on-vehicle units 21 to 29, or for at least one of the function networks 1 to 3.

In the abovementioned conventional technology, the respective networks are grouped depending on transmission rates of signals, or the like, and it is therefore necessary to convert the transmission rates of signals in a gateway, whereby a function does not properly operate in some cases. In contrast, in this embodiment, a communication network for an automobile is configured by arranging gateways (the gateway radio communication devices 11 to 13) in the respective functions (the function networks 1 to 3) of the automobile, whereby it is easy to guarantee that operations of each of the functions are properly executed.

Additionally, in the abovementioned conventional technology, an on-vehicle communication network has been unable to be achieved with the reason being that: the wiring harness increases in amount, whereby not only the laying out of the wiring harness becomes difficult because the wiring harness increases in weight, but also securing of a space in a vehicle becomes difficult because an installation space for connectors become very large. In contrast, in this embodiment, a communication network is achieved by: wirelessly configuring, by use of radio communication performed by the gateway radio communication devices 11 to 13 and the endpoint radio communication devices 31 to 39, a wiring harness which binds together signal wires and power wires; and additionally configuring the power sources 41 to 49 to be distributed power sources.

Additionally, in this embodiment, communication of a control signal between one and another one of the on-vehicle units 21 to 23 is performed between the gateway radio communication device 11 and each of the corresponding endpoint radio communication devices 31 to 33 in the function network 1 provided with these on-vehicle units 21 to 23. In other words, a control signal of the on-vehicle units 21 to 23 is communicated in the closed function network 1. Likewise, communication of a control signal between one and another one of the on-vehicle units 24 to 26 is performed, in the function network 2, between the gateway radio communication device 12 and each of the endpoint radio communication devices 34 to 36, and communication of a control signal between one and another one of the on-vehicle units 27 to 29 is performed, in the function network 3, between the gateway radio communication device 13 and each of the endpoint radio communication devices 37 to 39.

Because communication of control signals of the on-vehicle units 21 to 29 is thus completed in the respective function networks 1 to 3, operational responses of functions included in the functional networks 1 to 3 are guaranteed, and operations of the respective functions can be properly executed.

Additionally, this embodiment includes the vehicle monitoring apparatus 4. This vehicle monitoring apparatus 4 performs radio communications with at least any one of the gateway radio communication devices 11 to 13, and monitors at least any one of: radio communication performed among the on-vehicle units 21 to 29, the gateway radio communication devices 11 to 13 and the endpoint radio communication devices 37 to 39; and the entirety of the power sources 41 to 49.

Thereby, in a case where any abnormality has supposedly occurred in radio communication performed among the on-vehicle units 21 to 29, the gateway radio communication devices 11 to 13 and the endpoint radio communication devices 37 to 39, or in the power sources 41 to 49, in any network of the function networks 1 to 3, the abnormality is reported to the vehicle monitoring apparatus 4 and is presented to the user by the display section 450, whereby the user can know the abnormality and is also enabled to comprehend a cause of a functional failure. By thus setting up the vehicle monitoring apparatus 4 which binds the functional networks 1 to 3 together, the on-vehicle communication apparatus is enabled to serve a function as a radio communication network for an automobile.

### «Second Embodiment»

Next, a second embodiment of the present invention will be described. Operations of a functional network, in a case where the two on-vehicle units 21 and 22 operate, have been described in the first embodiment. On the other hand, in this embodiment, operations of a functional network, in a case where three or more on-vehicle units operate, for example, a case where a door is locked or unlocked by using an intelligent key, will be described.

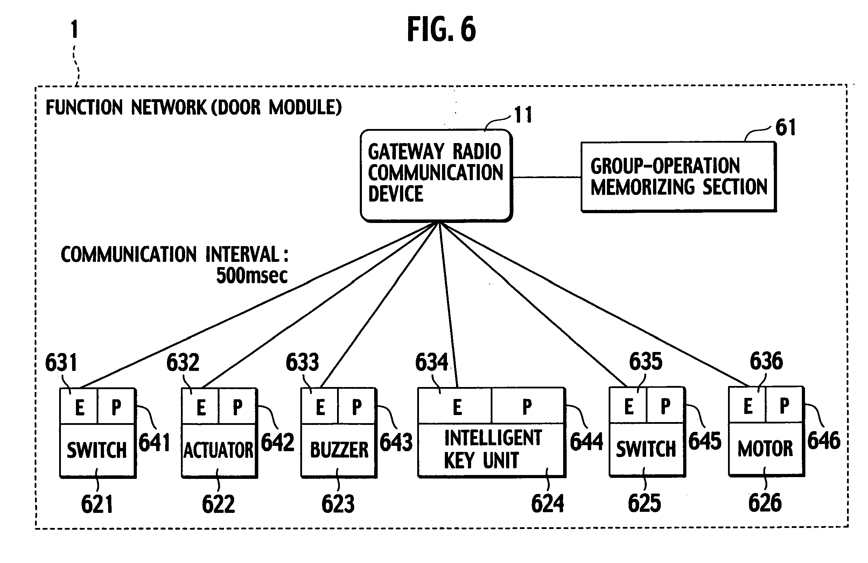

Fig. 6 is a block diagram of an on-vehicle communication apparatus (a radio communication network for an automobile) of this embodiment.

As in the case with the first embodiment, the function network 1 is a door module of the driver's seat side and includes the gateway radio communication device 11. To the gateway radio communication device 11, a group-operation information memorizing unit 61 is connected.

The function network 1 includes, for example, an on-vehicle unit 621 which is a switch, an on-vehicle unit 622 which is an actuator, an on-vehicle unit 623 which is a buzzer, an on-vehicle unit 624 which is an intelligent key unit, an on-vehicle unit 625 which is a switch, and an on-vehicle unit 626 which is a motor. Endpoint radio communication devices 631 to 636, and power sources 641 to 646 are provided to the respective on-vehicle units 621 to 626.

As in the case with the first embodiment, the gateway radio communication device 11 is wirelessly connected by radio waves to the respective endpoint radio communication device 631 to 636. Additionally, the gateway radio communication device 11 is connected to the group-operation information memorizing unit 61. The gateway radio communication device 11 and the endpoint radio communication devices 631 to 636 are communication devices of a communication method requiring a very small power consumption. This communication method is, for example, a communication method utilized in a personal area network defined by IEEE 802.16. The gateway radio communication device 11 polls the endpoint radio communication devices 631 to 636 at predetermined communication intervals, for example, every 500 milliseconds.

For example, in a case such as an intelligent key system where three or more on-vehicle units operate in conjunction with one another, those on-vehicle units are registered as a group in the group-operation information memorizing unit 61. The on-vehicle units having been registered as a group are preferentially caused to operate by the gateway radio communication device 11. In other words, while the gateway radio communication device 11 performs communication at the same time as polling the endpoint radio communication devices 631 to 636, it first polls endpoint radio communication devices having been registered in the group-operation information memorizing unit 61, and then polls endpoint radio communication devices having not been registered therein. In a case where the gateway radio communication device 11 has a selecting function, the gateway radio communication device 11 selects the endpoint radio communication devices having been registered in the group-operation information memorizing unit 61, and preferentially performs communication therewith. Note that, in a case where a CSMA/CD method is adopted, average values of random time periods, between times when communication is interrupted and when it is restarted, are set short for the endpoint radio communication devices having been registered as a group, and set long for the other endpoint radio communication devices.

The endpoint radio communication devices 631 to 636 are respectively connected to the on-vehicle units 621 to 626 and to the power sources 641 to 646. Each of the endpoint radio communication devices 631 to 636 is configured to be connected to corresponding one of the on-vehicle units 621 to 626 and corresponding one of the power sources 641 to 646 in a basic unit of each of the on-vehicle units. In other words, the on-vehicle units 621 to 626 are respectively provided with the endpoint radio communication devices 631 to 636, and with the power sources 641 to 646.

As in the case with the first embodiment, among the on-vehicle units 621 to 626, there is one that is not required to operate with a vehicle power supply voltage, for example, 12 V. A CPU of an electric circuit, or the like, is configured to operate with a voltage that makes a power consumed thereby smaller, for example, a voltage of 3 V or less. On the other hand, among the on-vehicle units 621 to 626, there is also one that requires a large power supply capacity to operate, and is configured to operate with a voltage higher than the vehicle power supply voltage. The power sources 641 to 646 are power sources of a cell scheme by which power supply voltages are individually supplied to the respective on-vehicle units 621 to 626 with appropriate voltages therefor, and the power sources 641 to 646 thereby eliminate the need of any DC-DC converter which converts a voltage into the vehicle power supply voltage.

Note that, depending on communication frequencies of the on-vehicle units 621 to 626, and on capacities of the power sources 641 to 646, any one of the on-vehicle units 621 to 626 may share the endpoint radio communication devices 631 to 636 or the power sources 641 to 646 with another one of the on-vehicle units.

The on-vehicle unit 621 is a switch operated by a user in order to lock/unlock a door. The on-vehicle unit 622 is an actuator which locks/unlocks the door. The on-vehicle unit 623 is a buzzer for informing the user about the locking/unlocking with a buzz when the on-vehicle unit 622 (the actuator) has operated. The on-vehicle unit 624 is an intelligent key unit, which, upon reception of a locking request signal or an unlocking request signal from the on-vehicle unit 631 (the switch), transmits the signal to the on-vehicle unit 622 (the actuator) and, at the same time, transmits the signal also to intelligent key units of the other doors. The on-vehicle unit 625 is a switch for opening/closing a window glass, and for opening/closing, and making an adjustment to a door mirror. The on-vehicle unit 626 is a motor for opening/closing a window glass, and for opening/closing, and making an adjustment to a door mirrors.

### (Functions)

Next, functions of the on-vehicle communication apparatus of this embodiment will be described.

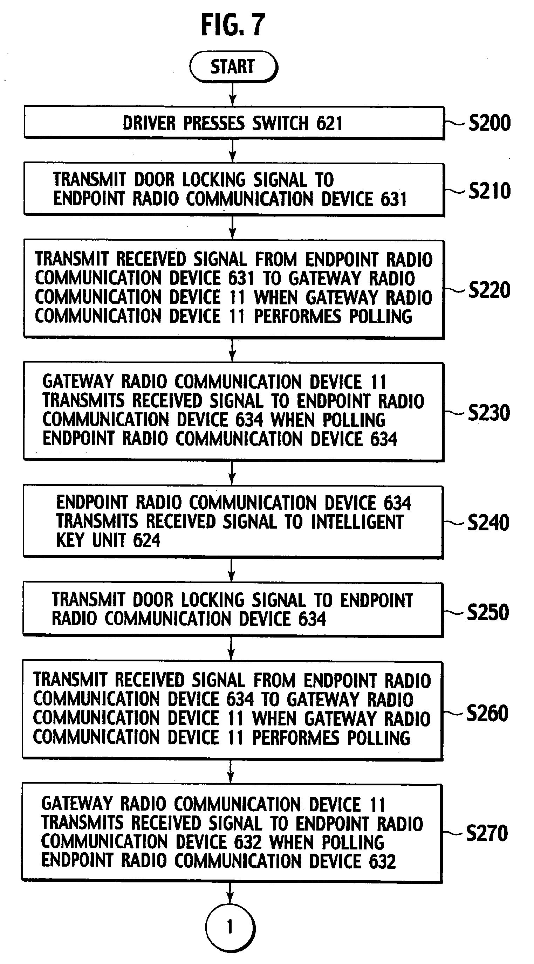

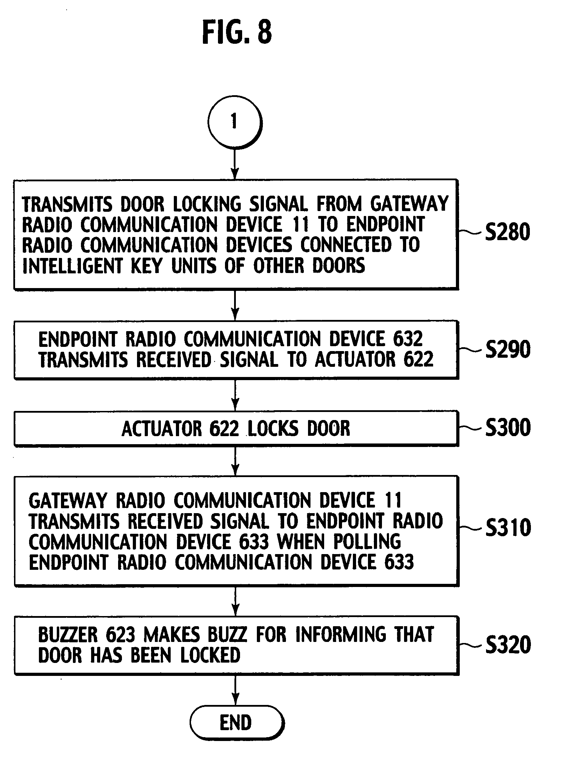

Figs. 7 and 8 are flowcharts showing operations of the on-vehicle communication apparatus of this embodiment.

In this embodiment, a case where, while the function network 1 is a door module of the driver' s seat side, the door is locked by using an intelligent key will be described.

First of all, the user presses the on-vehicle unit 621 (the switch) when the user tries to lock the door (S200).

Next, the on-vehicle unit 621 (the switch) transmits a door locking signal to the endpoint radio communication device 631 (S210).

Then, the endpoint radio communication device 631 transmits the door locking signal to the gateway radio communication device 11 when the gateway radio communication device 11 has accessed the endpoint radio communication device 631 so as to check a transmission request (S220).

When polling the endpoint radio communication device 634 to which the on-vehicle unit 624 (the intelligent key unit) is connected, the gateway radio communication device 11 transmits the door locking signal to the endpoint radio communication device 634 (S230).

The endpoint radio communication device 634 transmits the received signal to the on-vehicle unit 624 (the intelligent key unit) (S240).

The on-vehicle unit 624 (the intelligent key unit) transmits the door locking signal to the endpoint radio communication device 634 (S250).

The endpoint radio communication device 634 transmits the door locking signal to the gateway radio communication device 11 when the gateway radio communication device 11 has accessed the endpoint radio communication device 634 so as to check a transmission request (S260).

The gateway radio communication device 11 transmits the door locking signal to the endpoint radio communication device 632 when polling the endpoint radio communication device 632 to which the on-vehicle unit 622 (the actuator) is connected (S270).

At this time, the gateway radio communication device 11 transmits the door locking signal also to endpoint radio communication devices connected to intelligent key units of the other doors (S280).

The endpoint radio communication device 632 transmits the received signal to the on-vehicle unit 622 (the actuator) (S290).

Then, the on-vehicle unit 622 (the actuator) locks the door (S300).

Additionally, the gateway radio communication device 11 transmits the door locking signal to the endpoint radio communication device 633 when polling the endpoint radio communication device 633 to which the on-vehicle unit 623 (the buzzer) is connected (S310).

Then, the on-vehicle unit 623 (the buzzer) makes a buzz for informing that the door has been locked (S320).

When the user is operating the intelligent key, a higher priority is given to intelligent key operations, and opening/closing of a window glass, and opening/closing of and adjustment of a door mirror receive a lower priority. Additionally, when the user is operating the intelligent key, the endpoint radio communication devices 635 and 636, which relate to opening/closing of a window glass, and to opening/closing of and adjustment of a door mirror, are not allowed to operate. For example, assume that a time period, between times when the on-vehicle unit 621 (the switch) is pressed and when the on-vehicle unit 623 (the buzzer) sounds, has been determined to be not more than 2 seconds. In this case, a communication interval in the intelligent key operations is not set to such a short period as 100 milliseconds, but is set to such a long period as 400 milliseconds or 500 milliseconds in order to have the operations completed in not more than 2 seconds. Thereby, an amount of power consumption can be reduced with operational responsiveness being maintained.

As has been described above, in this embodiment, in the function network 1, priority is given to communication among the on-vehicle units 621 to 624 whose operational statuses are fed back to the user by an operation of the user. In other words, among the on-vehicle units of the function network 1, for example, priority is given to communication in a group of the on-vehicle units (the on-vehicle units 621 to 624) that relate to operations such as the intelligent key operations which are started by an operation of the user, and in which an locked or unlocked state is fed back to the user by means of a buzzer or the like. Thereby, in the function network 1, operations to which higher responsiveness is required can be guaranteed.

Additionally, in this embodiment, in the function network 1, based on a determined time period between times when operations are started and when the operations are ended, a communication interval between the gateway radio communication device 11 and each of the endpoint radio communication devices 631 and 636 is set to a period as long as possible. Thereby, an amount of power consumption can be suppressed with operational responsiveness being maintained.

Additionally, in this embodiment, in the function network 1, when the on-vehicle units 621 to 624 are operating, the endpoint radio communication devices 635 and 636 of the other on-vehicle units 625 and 626 are not allowed to operate. For example, when the intelligent key operations are being executed, by not allowing the endpoint radio communication devices 635 and 636 to execute any operations which are unrelated to the intelligent key operations, the number of times when the gateway radio communication device 11 performs polling can be reduced, whereby an amount of power consumption can be suppressed.

### «Third Embodiment»

Next, a third embodiment of the present invention will be described.

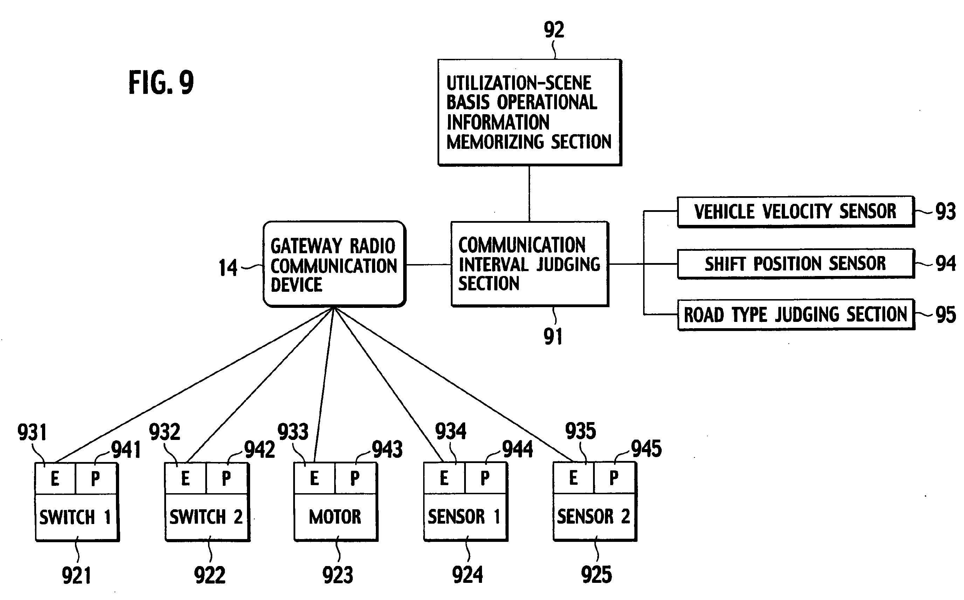

An on-vehicle communication apparatus (a radio communication network for an automobile) of this embodiment is, as shown in Fig. 9, provided with a gateway radio communication device 14, a communication interval judging section 91, a utilization-scene basis operational information memorizing section 92, a vehicle velocity sensor 93, a shift position sensor 94 and a road type judging section 95.

A function network of the on-vehicle communication apparatus of this embodiment is further provided with, for example, an on-vehicle unit 921 which is a switch, an on-vehicle unit 921 which is a switch, an on-vehicle unit 921 which is a motor, an on-vehicle unit 921 which is a sensor, and an on-vehicle unit 921 which is a sensor. Endpoint radio communication devices 931 to 935, and power sources 941 to 945 are provided to these respective on-vehicle units 921 to 925.

The gateway radio communication device 14 is wirelessly connected by radio waves to the respective endpoint radio communication device 931 to 935. The gateway radio communication device 14 and the endpoint radio communication devices 931 to 935 are communication devices of a communication method requiring a very small power consumption. This communication method is, for example, a communication method utilized in a personal area network defined by IEEE 802.16.

The endpoint radio communication devices 931 to 935 are respectively connected to the on-vehicle units 921 to 925, and to the power sources 941 to 945. The gateway radio communication device 14 polls the endpoint radio communication devices 931 to 935 at predetermined communication intervals, for example, every 500 milliseconds. Each of the endpoint radio communication devices 931 to 935 is configured to be connected to corresponding one of the on-vehicle units 921 to 925 and corresponding one of the power sources 941 to 945 in a basic unit of each of the on-vehicle units. In other words, the on-vehicle units 921 to 925 are respectively provided with the endpoint radio communication devices 931 to 935, and with the power sources 941 to 945.

Note that, among the on-vehicle units 921 to 925, there is one that is not required to operate with a vehicle power supply voltage, for example, 12 V. A CPU of an electric circuit, or the like, is configured to operate with such a voltage that makes a power consumed thereby smaller, for example, a voltage of 3 V or less. On the other hand, among the on-vehicle units 921 to 925, there is also one that requires a large power supply capacity to operate, and is configured to operate with a voltage higher than the vehicle power supply voltage. The power sources 941 to 945 are power sources of a cell scheme by which power supply voltages are individually supplied to the respective on-vehicle units 921 to 925 with appropriate voltages therefor, and the power sources 941 to 945 thereby eliminate the need of any DC=DC converter which converts a voltage into the vehicle power supply voltage.

Additionally, depending on communication frequencies of the on-vehicle units 921 to 925 in each function network, and on capacities of the power sources 941 to 945, it is also possible for any one of the on-vehicle units 921 to 925 to share, with another on-vehicle unit in the same function network, the endpoint radio communication devices 931 to 935 or the power sources 941 to 945.

Additionally, the gateway radio communication device 14 is connected to the communication interval judging section 91. In accordance with a status of a vehicle (that is, a vehicle signal) on which the on-vehicle communication apparatus is mounted, the communication interval judging section 91 determines a communication interval between the gateway radio communication device 14 and each of the endpoint radio communication devices 931 to 935. Communication intervals are set for the respective on-vehicle units 921 to 925, and are divided into four levels which are: "a relatively short communication interval" with an endpoint radio communication device; "a relatively long communication interval" therewith; "turn-off of a power source of an endpoint radio communication device" in a case where an on-vehicle unit is not utilized; and "turn-off of power sources of an endpoint radio communication device and an on-vehicle unit" in a case where it is not desirable that the on-vehicle unit be operated (where operations of the on-vehicle unit are prohibited).

The communication interval judging section 91 is connected to the utilization-scene basis operational information memorizing section 92, the vehicle velocity sensor 93, the shift position sensor 94 and the road type judging section 95. The vehicle velocity sensor 93 can recognize a velocity of the vehicle by counting pulses occurring in response to rotation of a wheel. The shift position sensor 94 can recognize which of "P," "R," "N," "D" and "L" a shift position is. The road type judging section 95 can judge whether a road is an express highway (a freeway) or a general road. In the utilization-scene basis operational information memorizing section 92, as shown in Tables 1 to 3, there are memorized: a communication interval of radio communication between the gateway radio communication device 14 and each of the endpoint radio communication devices 931 to 935; and cases where power sources for the endpoint radio communication devices 931 to 935 are turned off.

In other words, Table 1 is a table showing communication intervals (including turn-off of an endpoint radio communication device) required for endpoint radio communication devices of on-vehicle units with respect to each shift position; Table 2 is a table showing communication intervals (including turn-off of an endpoint radio communication device) required for endpoint radio communication devices of on-vehicle units with respect to each vehicle velocity; and Table 3 is a table showing communication intervals (including turn-off of an endpoint radio communication device) required for endpoint radio communication devices of on-vehicle units with respect to each road type. Note that each of "does not operate" and "better not operate" in Table 1, "not utilized" and "better not operate" in Table 2, and "not utilized" in Table 3 indicates that a power source of a corresponding endpoint radio communication device should be turned off.

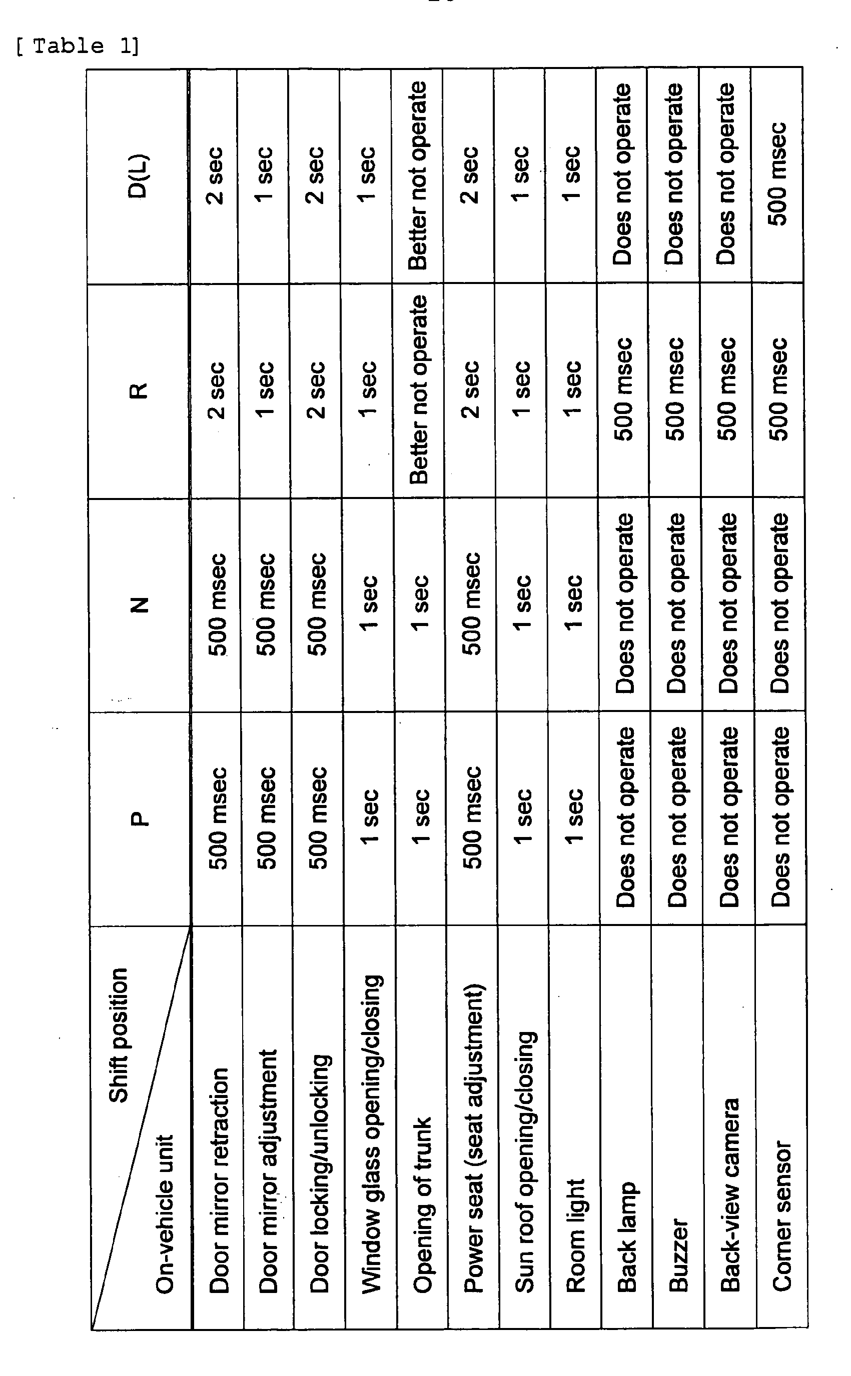

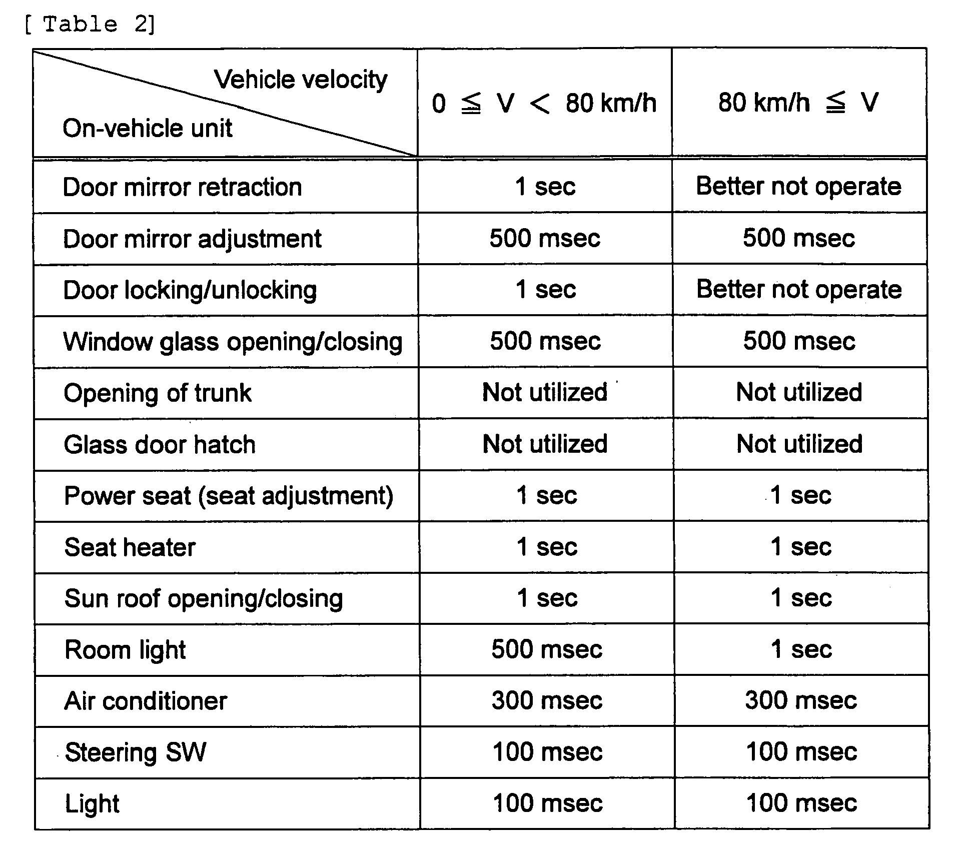

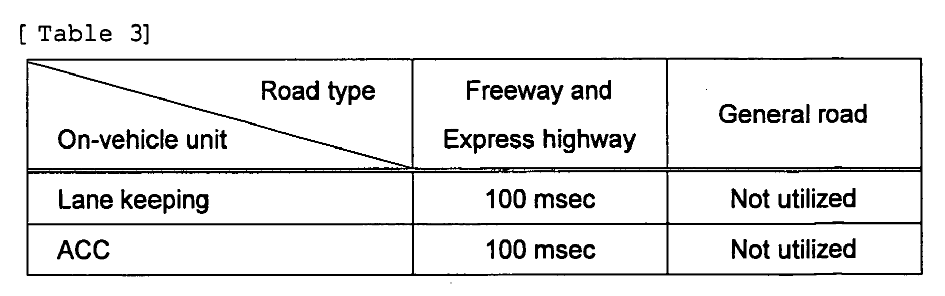

As the function networks as shown in Fig. 9, there are those related to a power train system, related to an air bag system, related to an installation panel system, related to doors (of the driver' s seat, of the passenger' s seat and of rear seats), a rear hatch and a roof, related to seats, related to lamps and the like. In addition, those function networks are integrated to compose a radio communication network for an automobile as the one of the first embodiment shown in Fig. 1. Another gateway radio communication device in this radio communication network for an automobile also can assume a configuration similar to that of this embodiment.

### (Functions)

Next, functions of the on-vehicle communication apparatus of this embodiment will be described.

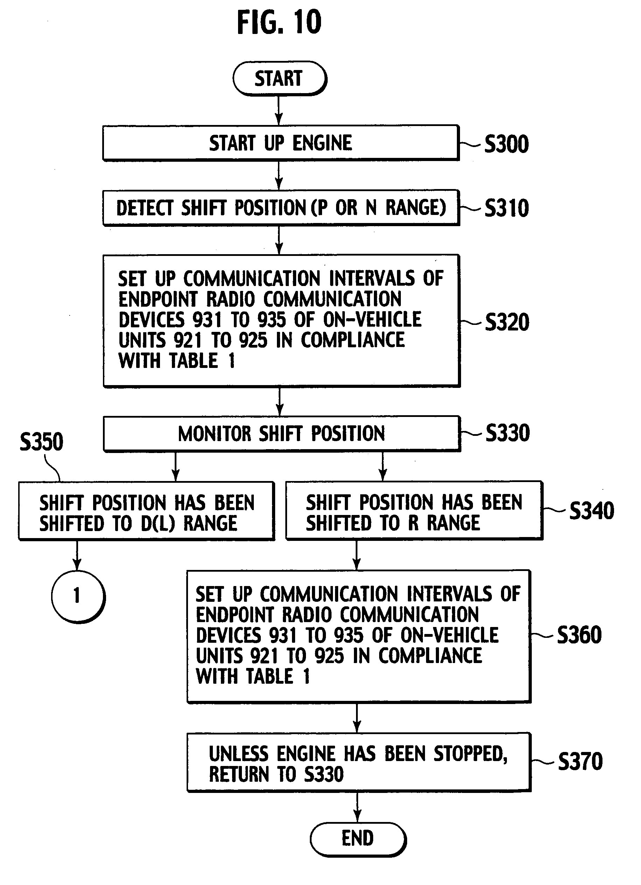

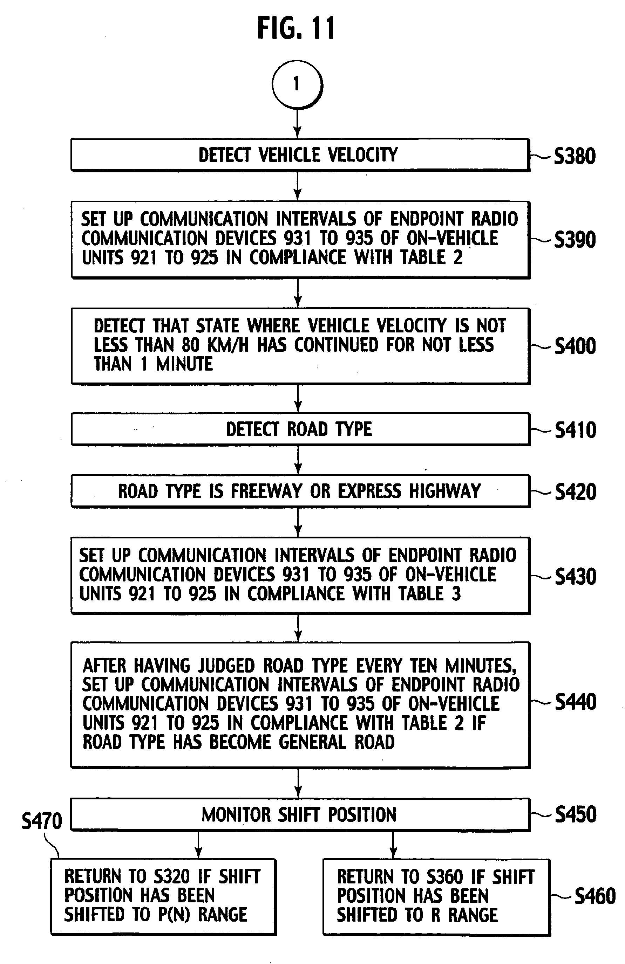

Figs. 10 and 11 are flowcharts showing operations of the on-vehicle communication apparatus of this embodiment.

First of all, a user starts up an engine (S300).

Next, the shift position sensor 94 (Fig. 9) detects a shift position (S310).

When the shift position sensor 94 has judged that the shift position is P, the communication interval judging section 91 sets up communication intervals of the endpoint radio communication devices 931 to 935 of the on-vehicle units 921 to 925 as shown in Table 1 (including turn-off of some of the endpoint radio communication devices, which will be the same in this flowchart hereinafter) (S320).

The shift position sensor 94 monitors shifting of the shift position (S330).

When the shift position sensor 94 has detected that the shift position has been shifted to the "R" range (S340), the communication interval judging section 91 sets up communication intervals of the endpoint radio communication devices 931 to 935 of the on-vehicle units 921 to 925 in compliance with Table 1 (5360).

If the engine has not been stopped, the operations go back to S330, the shift position sensor 94 monitors the shift position (S370).

When the shift position sensor 94 has detected that the shift position has been shifted to the "D" or "L" range (S350), the vehicle velocity sensor 93 detects a vehicle velocity (S380).

Based on the detected vehicle velocity, the communication interval judging section 91 sets up communication intervals of the endpoint radio communication devices 931 to 935 of the on-vehicle units 921 to 925 in compliance with Table 2 (S390) .

The communication interval judging section 91 detects whether or not a state where the vehicle velocity is not less than 80 km/h has continued for not less than 1 minute (S400).

When the communication interval judging section 91 has detected that the state where the vehicle velocity is not less than 80 km/h has continued for not less than 1 minute, the road type judging unit 95 judges a road type on the basis of current location information, road map information and the like (S410).

When the road type judging unit 95 has judged the road type to be a freeway or an express highway (5420), the communication interval judging section 91 sets up communication intervals of the endpoint radio communication devices 931 to 935 of the on-vehicle units 921 to 925 in compliance with Table 3 (S430).

When, after having judged a road type every ten minutes, the road type judging unit 95 has judged that the road type has become a general road, the communication interval judging section 91 sets up communication intervals of the endpoint radio communication devices 931 to 935 of the on-vehicle units 921 to 925 in compliance with Table 2 (S440).

Then, the shift position is again monitored by the shift position sensor 94 (S450).

When the shift position sensor 94 has detected that the shift position has been shifted to the "P" or "N" range, the operations are returned to S320 (S470).

Alternatively, when the shift position sensor 94 has detected that the shift position has been shifted to the "R" range, the operations are returned to S360 (S460).

As has been described above, in this embodiment, each of the on and off states of the power sources 941 to 945, which corresponds to at least any one of corresponding one of the endpoint radio communication devices 931 and 935 and corresponding one of the on-vehicle units 921 to 925, is configured to be changed in accordance with a traveling status (a traveling scene) of the subject vehicle. Additionally, in this embodiment, a communication interval, between the gateway radio communication device 14 and each of the endpoint radio communication devices 931 to 935, is configured to be controlled in accordance with a traveling status of the subject vehicle, that is, in accordance with a traveling velocity of the subject vehicle, a shift position thereof, and a road type. Because activated statuses (on or off states of the power sources, or communication intervals) of the endpoint radio communication devices 931 to 935 are thus changed in accordance with a status of the subject vehicle (that is, a vehicle signal), required operational responsiveness can be obtained with an amount of power consumption being suppressed. Specifically, (1) an amount of power source consumption can be reduced because some of the power sources of the endpoint radio communication devices 931 to 935, which correspond to some of the on-vehicle units 921 to 925 that relate to unutilized functions, are turned off in accordance with a traveling scene.

(2) Safety is further enhanced because some of the power sources of the endpoint radio communication devices 931 to 935 that better not operate are turned off in accordance with a traveling scene.

(3) Because some of the communication intervals of the endpoint radio communication devices 931 to 935 that relate to unutilized functions are extended in accordance with a traveling scene, the number of less necessary communications decreases, and operations of the radio communication network become stable.

(4) Because some of the communication intervals of the endpoint radio communication devices 931 to 935 that relate to utilized functions are shortened in accordance with a traveling scene, operational responsiveness required for the network in terms of driving operations can be secured.

Additionally, because communication intervals depend on a traveling velocity of the subject vehicle, a shift position thereof, and a road type, operational responsiveness required for the network in terms of driving operations can be secured, and an amount of power consumption can be reduced.

The present application claims priority based on Japanese Patent Application No. 2005-111593 filed on April 8, 2005, the contents of which are incorporated herein by reference.

Although the suitable embodiments of the present invention have been exemplified hereinabove, the present invention is not limited to those embodiments, and it is obvious that those skilled in the art can variously conceive other embodiments and modification examples which belong to a technical scope of the present invention.

### INDUSTRIAL APPLICABILITY

According to the on-vehicle communication apparatus and method of the present invention, a communication network for an automobile is configured by placing a gateway radio communication device in each function network of the automobile, whereby operations by function can be appropriately performed. Accordingly, the on-vehicle communication apparatus and method of the present invention are industrially applicable.

## Claims

1. An on-vehicle communication apparatus comprising:
an endpoint radio communication device provided for each one or more on-vehicle units;
a gateway radio communication device which is arranged in each of function networks each provided with the one or more on-vehicle units, and which performs radio communications with the endpoint radio communication devices that are included in each of the function networks; and
a power source provided for any one of the one or more on-vehicle units and the one or more function networks.

2. The on-vehicle communication apparatus according to claim 1, wherein communication of a control signal of each of the on-vehicle units is performed between corresponding one of the gateway radio communication device, and the corresponding one of the endpoint radio communication devices in each function network which is provided with the one of the on-vehicle units.

3. The on-vehicle communication apparatus according to claim 1, further comprising a vehicle monitoring apparatus which performs radio communications with the gateway radio communication devices, and which monitors at least any one of: the entirety of the power sources; and radio communication among the on-vehicle units, the gateway radio communication devices and the endpoint radio communication devices.

4. The on-vehicle communication apparatus according to claim 1, wherein, in each of the function networks, priority is given to communications of one of the on-vehicle units that is configured to feed back, in response to an operation of a user, operational status thereof to the user.

5. The on-vehicle communication apparatus according to claim 1, wherein, in each of the function networks, an interval of communications between the gateway radio communication device and each of the corresponding endpoint radio communication devices has been set as long as possible on the basis of a prescribed time period from start of operations to end thereof.

6. The on-vehicle communication apparatus according to claim 1, wherein, in each of the function networks, when those of the on-vehicle units that have been in advance registered as a group are operating, the endpoint radio communication devices of the other on-vehicle units are not allowed to operate.

7. The on-vehicle communication apparatus according to claim 1, wherein the power source for any one of the endpoint radio communication devices and the on-vehicle units is changed between on and off states in accordance with a traveling status of a vehicle on which the on-vehicle communication apparatus is mounted.

8. The on-vehicle communication apparatus according to claim 1, wherein a communication interval, between the gateway radio communication devices and the corresponding endpoint radio communication devices, is controlled in accordance with a traveling status of a vehicle on which the on-vehicle communication apparatus is mounted.

9. The on-vehicle communication apparatus according to claim 8, wherein the communication interval is controlled on the basis of a traveling speed of the subject vehicle, a shift position thereof, and a road type.

10. A communication method comprising:
providing an endpoint radio communication device for each one or more on-vehicle units;
arranging, in each of function networks each provided with the one or more on-vehicle units, a gateway radio communication device which performs radio communications with the endpoint radio communication devices that are included in each of the function networks; and
providing a power source for the one or more on-vehicle units and the one or more function networks.
